# EUROPEAN PATENT APPLICATION

(11) **EP 4 644 315 A1**
(43) Date of publication of application: **05.11.2025**
(21) Application number: 23912527.1
(22) Date of filing: 01.11.2023
(51) Int. Cl.: C01B 15/013, B01D 61/42, B01D 61/48, C02F 1/469

(54) **METHOD FOR PURIFYING HYDROGEN PEROXIDE**

(30) Priority: 29.12.2022 KR 20220189255
(71) Applicant: OCI Company Ltd., Seoul 04532 (KR)
(72) Inventor: UM, Myung Sup, Seongnam-si Gyeonggi-do 13212 (KR); YE, Hee Chang, Seongnam-si Gyeonggi-do 13212 (KR); YOO, Jihoon, Seongnam-si Gyeonggi-do 13212 (KR); KIM, Kyung Yeol, Seongnam-si Gyeonggi-do 13212 (KR)
(74) Representative: Marks & Clerk LLP
(86) International application number: PCT/KR2023/017220
(87) International publication number: WO 2024/143847

(57) **Abstract**

The present invention relates to a method for purifying hydrogen peroxide, and more particularly, to the method including regenerating an adsorbent resin of a primary purification system using an acidic solution, an alkaline solution, or a combination thereof; purifying a crude product of hydrogen peroxide with the adsorbent resin of the primary purification system; and purifying a primary purified hydrogen peroxide solution using a secondary purification system. The secondary purification system includes an electrodeionization system, and the adsorbent resin removes organic carbon and cations from the crude product of hydrogen peroxide.

## Description

### TECHNICAL FIELD

The present invention relates to a method for purifying hydrogen peroxide, and more particularly, to a method for purifying hydrogen peroxide, the method including an electrodeionization process.

### BACKGROUND ART

Hydrogen peroxide has strong oxidation force and decomposition products thereof are harmless. Thus, hydrogen peroxide is used as an oxidization agent, a bleaching agent for silk threads or wool, and a catalyst for vinyl polymerization in the plastics industry. Moreover, hydrogen peroxide is also used for display wafer cleaning or semiconductor wafer cleaning in addition to the above uses.

With the advent of the information age, the field of displays, which visually express electrical information signals, has rapidly advanced. In response, various display devices with excellent properties such as reduced thickness, light weight, and low power consumption are being developed.

A representative example is an organic light emitting diode display device, which involves deposition and patterning processes of various materials on a substrate. In such deposition and patterning processes, conductive members such as metal masks may be used. Due to these deposition and patterning processes, the display substrate may be contaminated with various materials, and therefore, a cleaning process for the display substrate is required. A representative wet cleaning method for the display substrate is a chemical wet cleaning method using hydrogen peroxide.

Techniques for cleaning a semiconductor wafer may be classified into wet cleaning and dry cleaning. A cleaning process is similar to an etching process in that substances on the surface of a semiconductor wafer are removed, but is different therefrom in that impurities present on the surface of a semiconductor wafer are selectively removed. As a representative wet cleaning method, there is a chemical wet method using hydrogen peroxide.

### DISCLOSURE OF THE INVENTION

### TECHNICAL PROBLEM

The present invention provides a method for purifying hydrogen peroxide, the method capable of producing hydrogen peroxide of high purity.

The present invention provides a method capable of improving the performance and stability of an electrodeionization system in the purification of hydrogen peroxide.

### TECHNICAL SOLUTION

A method for purifying hydrogen peroxide according to the inventive concept of the present invention may include regenerating an adsorbent resin of a primary purification system using an acidic solution, an alkaline solution, or a combination thereof; purifying a crude product of hydrogen peroxide with the adsorbent resin of the primary purification system; and purifying a primary purified hydrogen peroxide solution using a secondary purification system. The secondary purification system may comprise an electrodeionization system, and the adsorbent resin may remove organic carbon and cations from the crude product of hydrogen peroxide.

A method for manufacturing an electronic device according to another inventive concept of the present invention may include performing a cleaning process on a substrate using the hydrogen peroxide purified according to the method for purifying hydrogen peroxide.

### ADVANTAGEOUS EFFECTS

A method for purifying hydrogen peroxide according to the present invention may obtain hydrogen peroxide of high purity to a high yield and in a large amount through an electrodeionization system. The method for purifying hydrogen peroxide according to the present invention may remove organic carbon and cations from hydrogen peroxide by using an adsorbent resin system prior to the electrodeionization system. In particular, by increasing the stability of hydrogen peroxide above a reference value using only a single adsorbent resin system, the stability and impurity removal efficiency of the electrodeionization system may be improved.

### BRIEF DESCRIPTION OF THE DRAWINGS

FIG. 1 is a schematic view for describing a hydrogen peroxide purification system according to embodiments of the present invention.
FIG. 2 is a schematic view for describing an electrodeionization system of the hydrogen peroxide purification system of FIG. 1.
FIG. 3 is a flowchart for describing a hydrogen peroxide purification process and a regeneration process of an adsorbent resin according to embodiments of the present invention.
FIG. 4 is a flowchart for describing a hydrogen peroxide purification process and a regeneration process of an adsorbent resin according to another embodiment of the present invention.
FIG. 5 is a schematic view for describing a hydrogen peroxide purification system according to embodiments of the present invention.
FIG. 6 is a schematic view for describing a cleaning process of a substrate using purified hydrogen peroxide according to embodiments of the present invention.

### MODE FOR CARRYING OUT THE INVENTION

In order to facilitate sufficient understanding of the configuration and effects of the present invention, preferred embodiments of the present invention will be described with reference to the accompanying drawings. However, the present invention is not limited to the embodiments set forth below, and may be embodied in various forms and modified in many alternate forms. Rather, these embodiments are provided so that this disclosure will be thorough and complete, and will fully convey the scope of the present invention to those skilled in the art to which the present invention pertains.

In the present description, when an element is referred to as being on another element, it means that the element may be directly formed on another element, or that a third element may be interposed therebetween. Also, in the drawings, the thicknesses of elements are exaggerated for an effective description of technical contents. Like reference numerals refer to like elements throughout the specification.

Although the terms such as first, second, third, and the like are used to describe various elements in various embodiments of the present description, these elements should not be limited by these terms. These terms are only used to distinguish one element from another. The embodiments described and exemplified herein also include the complementary embodiments thereof.

The terms used herein are for the purpose of describing embodiments and are not intended to be limiting of the present invention. In the present description, singular forms include plural forms unless the context clearly indicates otherwise. As used herein, the terms 'comprises' and/or 'comprising' are intended to be inclusive of the stated elements, and do not exclude the possibility of the presence or the addition of one or more other elements.

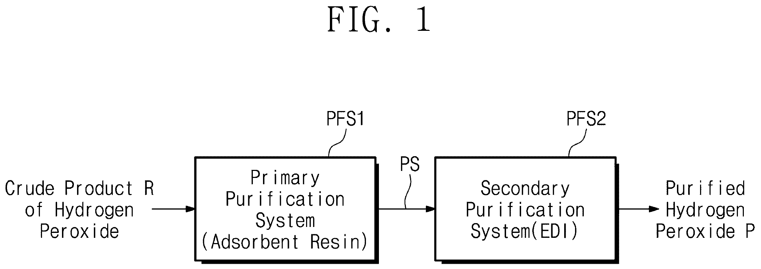

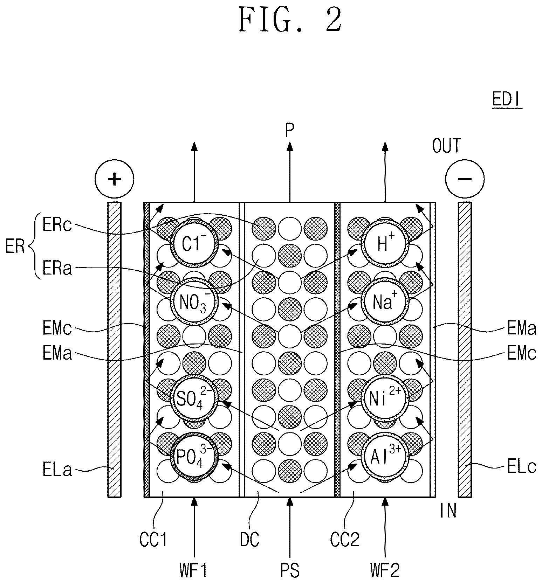

FIG. 1 is a schematic view for describing a hydrogen peroxide purification system according to embodiments of the present invention. FIG. 2 is a schematic view for describing an electrodeionization system of the hydrogen peroxide purification system of FIG. 1.

Referring to FIG. 1 and FIG. 2, the hydrogen peroxide purification system may include a primary purification system PFS1 and a secondary purification system PFS2. A crude product R of hydrogen peroxide is purified sequentially through the primary purification system PFS1 and the secondary purification system PFS2, and purified hydrogen peroxide P may be finally obtained from the crude product R of hydrogen peroxide.

The crude product R of hydrogen peroxide may be produced by an alkyl anthraquinone process. The crude product R of hydrogen peroxide may be a product synthesized by an alkyl anthraquinone hydrogenation-oxygenation reaction. The crude product R of hydrogen peroxide may be a product of an alkyl anthraquinone process which has not been subjected to a purification process such as distillation.

Specifically, when hydrogen is added to alkyl anthraquinone to produce hydroquinone and then the hydroquinone is reacted with oxygen in the air, the hydroquinone is reduced back to anthraquinone, which may produce hydrogen peroxide. The crude product R of hydrogen peroxide may be extracted and obtained by adding water to anthraquinone, which is a product of an oxidation reaction, and hydrogen peroxide.

The crude product R of hydrogen peroxide generated by the alkyl anthraquinone process may include metal impurities such as Al, Ni and Cr having a concentration of 100 ppb or greater, anion impurities such as PO₄³⁻, SO₄²⁻, NO₃⁻, and Cl⁻ having a concentration of 100 ppb or greater, and a total organic carbon (TOC) having a concentration of 100 ppm or greater.

The crude product R of hydrogen peroxide may be introduced into a primary purification system PFS1. The primary purification system PFS1 according to an embodiment of the present invention may be a resin system.

The resin system according to the present invention may include an adsorbent resin composed of a porous polymer. The resin system may remove organic carbon from the crude product R of hydrogen peroxide via an adsorption filter filled with the adsorbent resin. The adsorbent resin according to the embodiment of the present invention may remove not only organic carbon but also cations from the crude product R of hydrogen peroxide.

The adsorbent resin according to embodiments of the present invention may include porous polymer particles. The specific surface area of the adsorbent resin may range from 300 m² /g to 1,000 m² /g. More specifically, the specific surface area of the adsorbent resin may range from 300 m² /g to 800 m²/g.

The average pore size (or diameter) of the adsorbent resin may range from 10 Å to 200 Å. More specifically, the average pore size of the adsorbent resin may range from 40 Å to 100 Å. The pore volume of the adsorbent resin may range from 0.5 mL/g to 2 mL/g. The average particle diameter of the adsorbent resin may range from 0.3 mm to 2 mm.

The adsorbent resin according to the present invention may be a non-polar (or neutral) that does not carry electric charge. In one embodiment of the present invention, the adsorbent resin may include a hydrophobic polymer. The polymer of the adsorbent resin may have a hydrophobic group. For example, the hydrophobic group may include an alkyl group having 1 to 20 carbon atoms. The adsorbent resin according to the present invention may be a hydrophobic adsorbent resin that does not have an ion exchange group.

The polymer of the adsorbent resin may comprise a polyaromatic compound. More specifically, the polymer of the adsorbent resin may include an aromatic polymer to which a hydrophobic group is bonded. For example, the polymer of the adsorbent resin may include at least one selected from the group consisting of styrene/divinylbenzene copolymer, styrene/trivinylbenzene copolymer, and vinyltoluene/divinylbenzene copolymer. Preferably, hydrophobic group may be bonded to the copolymer.

The adsorbent resin according to the present invention may be a non-polar resin that does not carry a charge. In one embodiment of the present invention, an ion exchange resin having cationic/anionic functional group may be excluded from the adsorbent resin of the present invention. The adsorbent resin according to the present invention described above may adsorb and remove not only organic carbon but also cations in the crude product R of hydrogen peroxide.

Impurities in the crude product R of hydrogen peroxide may be partially removed through a primary purification system PFS1, and a primary purified hydrogen peroxide solution PS may be obtained. The concentration of TOC in the primary purified hydrogen peroxide solution PS may be reduced to 100 ppm or less by the adsorbent resin, which serves as the primary purification system PFS1. The concentration of ions in the primary purified hydrogen peroxide solution PS may be reduced by the adsorbent resin, which serves as the primary purification system PFS1.

In another embodiment of the present invention, the adsorbent resin in the primary purification system PFS1 may further comprise an ionic resin in addition to a neutral resin. In other words, the adsorbent resin of the present invention may be a mixture of the neutral resin and the ionic resin. Through the ionic resin, ions may be more effectively removed in the primary purification system PFS1.

Cations in the crude product R of hydrogen peroxide may be adsorbed onto the adsorbent resin of the primary purification system PFS1, so that the concentration of cations in the primary purified hydrogen peroxide solution PS may be lower than the concentration of cations in the crude product R of hydrogen peroxide.

The primary purified hydrogen peroxide solution PS may be introduced into the secondary purification system PFS2. The secondary purification system PFS2 may include an electrodeionization system EDI. An electrodeionization process may be performed on the hydrogen peroxide solution PS using the electrodeionization system EDI.

Referring back to FIG. 2, the electrodeionization system EDI may include a first electrode ELa, a second electrode ELc, a first concentrate chamber CC1, a second concentrate chamber CC2, and a dilute chamber DC between the first and second concentrate chambers CC1 and CC2. The first and second concentrate chambers CC1 and CC2, and the dilute chamber DC may be interposed between the first and second electrodes ELa and ELc. For example, the first electrode ELa may be an anode, and the second electrode ELc may be a cathode.

Anion exchange membranes EMa and cation exchange membranes EMc may be alternately disposed between the first and second electrodes ELa and ELc. For example, an anion exchange membrane EMa may be interposed between the first concentrate chamber CC1 and the dilute chamber DC, and between the second concentrate chamber CC2 and the second electrode ELc, respectively. A cation exchange membrane EMc may be interposed between the second concentrate chamber CC2 and the dilute chamber DC, and between the first concentrate chamber CC1 and the first electrode ELa, respectively. The anion exchange membrane EMa may transmit anions, but not cations. The cation exchange membrane EMc may transmit cations, but not anions.

An ion exchange resin ER may be provided in the dilute chamber DC. In an embodiment of the present invention, the ion exchange resin ER may also be provided in the first concentrate chamber CC1 and the second concentrate chamber CC2. In particular, when the ion exchange resin ER is also provided in the first concentrate chamber CC1 and the second concentrate chamber CC2, the hydrogen peroxide purification efficiency may further be improved. The ion exchange resin ER may include an anion exchange resin ERa and a cation exchange resin ERc. The anion exchange resin ERa may adsorb anions, and move the anions to the anion exchange membrane EMa. The cation exchange resin ERc may adsorb cations, and move the cations to the cation exchange membrane EMc. For example, the ion exchange resin ER may prevent the resistance of the hydrogen peroxide solution PS from increasing even when the concentration of ions in the hydrogen peroxide solution PS decreases.

The hydrogen peroxide solution PS and water may be introduced into an inlet IN of the electrodeionization system EDI. The water may be purified water having low electrical conductivity. The concentration of hydrogen peroxide in the hydrogen peroxide solution PS to be introduced may be 1 wt% to 70 wt%. The hydrogen peroxide solution PS may be introduced into the dilute chamber DC, and the water may be introduced into the first concentrate chamber CC1 and the second concentrate chamber CC2. The concentration of hydrogen peroxide in a first concentrate WF1 to be introduced into the first concentrate chamber CC1 and the concentration of a second concentrate WF2 to be introduced into the second concentrate chamber CC2 may be 1 wt% or less.

Direct current power may be applied between the first and second electrodes, ELa and ELc, to allow a current to flow from the first electrode ELa to the second electrode ELc. Cations (e.g., metal impurities) of the hydrogen peroxide solution PS in the dilute chamber DC may pass through the cation exchange membrane EMc by electrostatic attraction generated through the direct current power and move to the second concentrate WF2 of the second concentrate chamber CC2. Anions (e.g., anion impurities) of the hydrogen peroxide solution PS in the dilute chamber DC may pass through the anion exchange membrane EMa by electrostatic attraction generated through the direct current power and move to the first concentrate WF1 of the first concentrate chamber CC1.

The concentration of ions in the hydrogen peroxide solution PS may decrease from the inlet IN of the dilute chamber DC to an outlet OUT thereof. In other words, the concentration of impurities in the hydrogen peroxide solution PS may decrease from the inlet IN of the dilute chamber DC to the outlet OUT thereof. The purified hydrogen peroxide P may be discharged through the outlet OUT of the dilute chamber DC.

The first concentrate WF1 and the second concentrate WF2 may be discharged through the outlet OUT of each of the first and second concentrate chambers CC1 and CC2. The discharged first concentrate WF1 and second concentrate WF2 may have impurities concentrated therein, which are transferred from the hydrogen peroxide solution PS. For example, the discharged first concentrate WF1 and second concentrate WF2 may be discarded. For another example, the first concentrate WF1 and the second concentrate WF2 may be filtered and reintroduced into the inlet IN of the electrodeionization system EDI. That is, the first concentrate WF1 and the second concentrate WF2 may be circulated in the electrodeionization system EDI.

Since the concentration of the ions in the hydrogen peroxide solution PS decreases from the inlet IN of the dilute chamber DC to the outlet OUT thereof, in one region of the dilute chamber DC adjacent to the outlet OUT, the resistance of the hydrogen peroxide solution PS may increase. As a result, in the one region of the dilute chamber DC, a voltage drop may occur, so that decomposition of water and/or decomposition of hydrogen peroxide may occur. Hydrogen ions and hydroxide ions may be produced by the decomposition of water and/or the decomposition of hydrogen peroxide, and the produced hydrogen ions and hydroxide ions may regenerate the ion exchange resin ER. Therefore, the electrodeionization system EDI according to the present invention may not require a separate process for regenerating the ion exchange resin ER.

The hydrogen peroxide purification system according to embodiments of the present invention uses the electrodeionization system EDI as the secondary purification system PFS2 for hydrogen peroxide, so that hydrogen peroxide of high purity may be obtained to a high yield. Furthermore, the electrodeionization system EDI can be operated at a relatively high flow rate, and for example it may be operated at about 0.1 to 10 m³/hr per electrodeionization stack. The amount of production can be adjusted depending on the system design (e.g., stack area, number of cells, and number of stacks), thereby ultimately enabling the mass production of high-purity hydrogen peroxide.

It was confirmed that when the stability of the hydrogen peroxide solution PS introduced into the electrodeionization system EDI is lower than the reference value, the purification performance and stability of the electrodeionization system EDI rapidly decrease over the operation time. It was also confirmed that when the stability of the hydrogen peroxide solution PS is lower than the above reference value, the removal rates of ions and organic carbon by the electrodeionization system EDI also decrease rapidly over the operation time.

According to embodiments of the present invention, the adsorbent resin, which serves as the primary purification system PFS 1 is capable of removing not only organic carbon in the crude product R of hydrogen peroxide but also ions (e.g., anions and cations). As a result, the stability of the hydrogen peroxide solution PS introduced into the electrodeionization system EDI may be improved. When the stability of the hydrogen peroxide solution PS is equal to or higher than the above reference value, the purification performance and stability of the electrodeionization system EDI over the operation time can be maintained in a favorable state, and the removal rates of impurities (e.g., ions and organic carbon) can also be favorably maintained.

According to embodiments of the present invention, organic carbon and cations in the crude product R of hydrogen peroxide can be simultaneously removed using only the adsorbent resin process, which serves as the primary purification system PFS1. As a comparative example of the present invention, if an additional purification system (e.g., an ion exchange resin system or a reverse osmosis system) is used prior to the introduction into the electrodeionization system EDI, the economic efficiency of the hydrogen peroxide purification process may be significantly reduced.

As another comparative example of the present invention, when the adsorbent resin process, which serves as the primary purification system PFS1, is omitted and the crude product R of hydrogen peroxide is directly introduced into the electrodeionization system EDI, a problem may occur in which the performance and stability of the electrodeionization system EDI are significantly reduced.

The present invention may improve the performance and stability of the electrodeionization system EDI through only a simple pretreatment process, namely, the adsorbent resin process serving as the primary purification system PFS1.

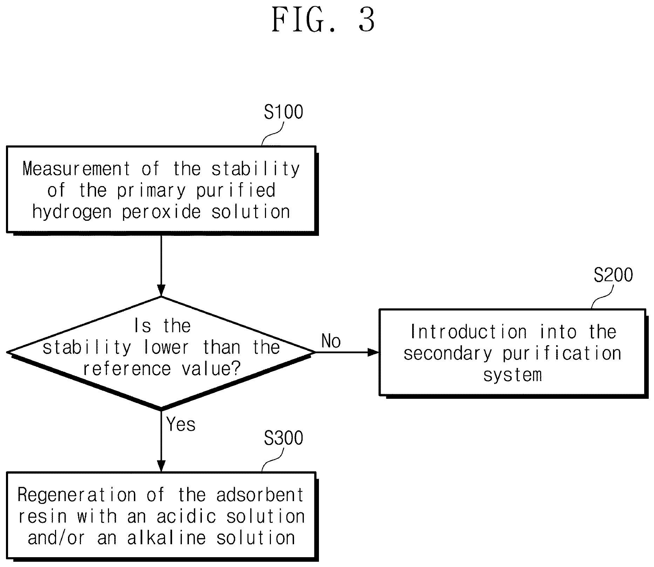

FIG. 3 is a flowchart for describing a hydrogen peroxide purification process and a regeneration process of an adsorbent resin according to embodiments of the present invention. Referring to FIG. 3, the stability of the primary purified hydrogen peroxide solution PS, which has previously been subjected to the primary purification system PFS1 (adsorbent resin) of FIG. 1, can be measured (S100). The stability can be measured using a method for measuring the stability of hydrogen peroxide (standard number: KSM1112) defined in the National Standard Certification Integrated Information System (KS standard).

According to embodiments of the present invention, the reference value of the stability may be 90%. More specifically, the reference value of the stability may be 95%. If the stability of the hydrogen peroxide solution PS is lower than 90%, the purification performance and durability of the electrodeionization system EDI over the operation time may rapidly decrease. On the other hand, when the stability of the hydrogen peroxide solution PS is higher than 90%, the impurity removal rate of the electrodeionization system EDI over the operation time can be stably maintained, and the durability may also be improved.

If the measured stability of the hydrogen peroxide solution PS is equal to or higher than the above reference value, the hydrogen peroxide solution PS may be introduced into the secondary purification system, PFS2 and EDI, described with reference to FIGS. 1 and 2 (S200).

If the measured stability of the hydrogen peroxide solution PS is lower than the above reference value, the adsorbent resin of the primary purification system PFS1 may be regenerated. A method for regenerating the adsorbent resin according to embodiments of the present invention may include treating the adsorbent resin with an acidic solution, an alkaline solution, or a combination thereof (S300).

For example, the adsorbent resin may be washed with an acidic solution (e.g., hydrochloric acid and/or sulfuric acid). The adsorbent resin may be washed with an alkaline solution (e.g., sodium hydroxide and/or ammonium bicarbonate). The adsorbent resin may be washed with an acidic solution followed by an alkaline solution.

When the adsorbent resin is regenerated with an acidic solution and/or an alkaline solution, ions (e.g., cations) adsorbed within the adsorbent resin can be removed. As a result, the ion adsorption performance of the adsorbent resin may be restored again. Consequently, through the above-described regeneration method of the adsorbent resin, the stability of the primary purified hydrogen peroxide solution PS can be improved to be equal to or higher than the reference value (90%).

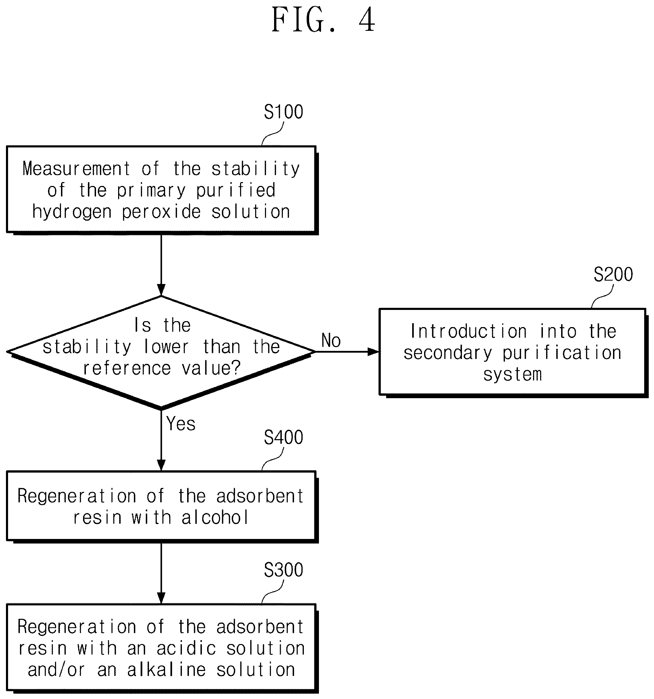

FIG. 4 is a flowchart for describing a hydrogen peroxide purification process and a regeneration process of an adsorbent resin according to another embodiment of the present invention. Referring to FIG. 4, the regeneration process of adsorbent resin may further include a step (S400) of regenerating the adsorbent resin with alcohol.

The adsorbent resin is typically regenerated by washing with alcohol (e.g., methanol) and water. This is because organic solvents such as alcohol are effective in removing organic matter adsorbed on the adsorbent resin. However, although the regeneration method using alcohol is effective in removing organic matter in the adsorbent resin, it may not be suitable for removing the above-described cations. Therefore, in the present invention, after the step of regenerating the adsorbent resin with alcohol (S400), the step of regenerating the adsorbent resin with an acidic solution and/or an alkaline solution (S300) may be further performed.

Meanwhile, according to another embodiment of the present invention, the step of regenerating the adsorbent resin with an acidic solution and/or an alkaline solution (S300) may be performed before the step of regenerating the adsorbent resin with alcohol (S400).

### Experimental Embodiments

Hydrogen peroxide was purified using the hydrogen peroxide purification process described with reference to FIG. 1. Specifically, the crude product of hydrogen peroxide generated by the alkyl anthraquinone process was subjected to primary purification via an adsorbent resin process. The stability of the purified hydrogen peroxide was measured in accordance with Standard No. KSM1112 of the National Standard Certification Integrated Information System. The primary purified hydrogen peroxide solution was subjected to a second purification using an electrodeionization system EDI according to the present invention.

In the first embodiment, the primary purification was performed using an adsorbent resin regenerated with an acidic solution and/or an alkaline solution. In the first comparative embodiment, the primary purification was performed using an adsorbent resin regenerated with alcohol. The concentration of ionic impurities in the purified hydrogen peroxide over the operation time of the EDI system was measured according to the first embodiment and the first comparative embodiment, and the results are shown in Table 1 below.

**[Table 1]**

| Primary Purified Hydrogen Peroxide | Secondary Purification EDI | Na (ppt) | Al (ppt) | Ni (ppt) | PO₄ (ppb) |
|---|---|---|---|---|---|
| First Comparative Embodiment (Stability: 75.7%) | Day 30 | 7,720 | 875 | 1,990 | 1,020 |
| First Embodiment (Stability: 95.5%) | Day 30 | 142 | 187 | 362 | 56 |
| | Day 180 | 128 | 97 | 294 | 238 |

Referring to Table 1, in the first comparative embodiment using an adsorbent resin regenerated with alcohol only, the stability was measured to be significantly low at 75.7%. It can be confirmed that the concentrations of cationic impurities such as Na, Al, and Ni significantly increased to 1,000 ppt or more on the 30th day of EDI operation. Referring to the first comparative embodiment, it can be confirmed that the cations in the adsorbent resin were not sufficiently removed below the reference level, so that the stability of the primary purified hydrogen peroxide decreases, thereby drastically reducing the purification performance of EDI. On the other hand, in the first embodiment using an adsorbent resin regenerated with an acidic solution and/or an alkaline solution, the stability was measured to be significantly high at 95.5%. It can be confirmed that the concentrations of cationic impurities such as Na, Al, and Ni are very low, around 100 ppt, despite the 30th day of EDI operation. Furthermore, it can be confirmed that in the case of the first embodiment, the concentration of ionic impurities still remains very low on day 180 as compared to the first comparative embodiment. Referring to the first embodiment, it can be confirmed that the adsorbent resin regenerated using the acidic solution and/or the alkaline solution can greatly improve the stability of the primary purified hydrogen peroxide, thereby allowing the EDI system to maintain stable performance and enhanced durability.

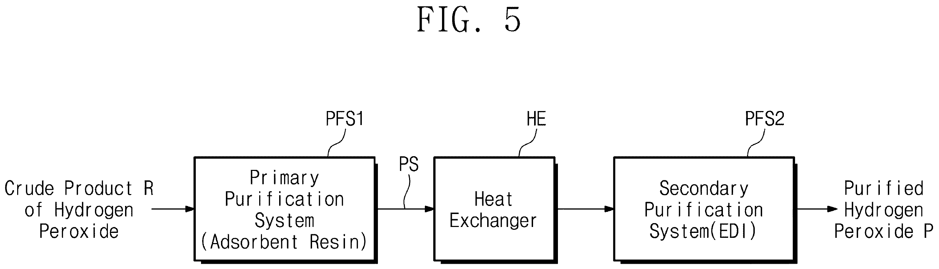

FIG. 5 is a schematic view for describing a hydrogen peroxide purification system according to embodiments of the present invention. Referring to FIG. 5, the hydrogen peroxide purification system may further include a heat exchanger HE disposed between the first purification system PFS1 and the secondary purification system PFS2. When the primarily purified hydrogen peroxide solution PS passes through the heat exchanger HE, the temperature thereof may be adjusted. The heat exchanger HE may adjust the temperature of the hydrogen peroxide solution PS to between -20°C to 20°C. In other words, the hydrogen peroxide solution PS having a temperature of -20°C to 20°C may be introduced into the electrodeionization system EDI, which is the secondary purification system PFS2.

Since hydrogen peroxide is a strong oxidization agent, hydrogen peroxide may oxidize and age an ion exchange medium in the dilute chamber DC of the electrodeionization system EDI. Accordingly, the pressure inside the electrodeionization EDI system may increase due to the oxygen generated by the decomposition of hydrogen peroxide through side reactions in the dilution chamber. As the temperature of hydrogen peroxide increases, the amount of oxygen generated may rapidly increase. If oxygen is excessively generated, the pressure in the electrodeionization system EDI may increase excessively, so that the electrodeionization system EDI may be damaged and the efficiency of a purification process may be decreased.

According to the present embodiment, the temperature of the hydrogen peroxide solution PS to be introduced into the electrodeionization system EDI may be appropriately adjusted through the heat exchanger HE to prevent oxygen from being excessively generated. The heat exchanger HE can further improve the stability of the hydrogen peroxide solution PS according to the present invention. As a result, damage to the electrodeionization system EDI may be prevented and purification efficiency of hydrogen peroxide may be increased.

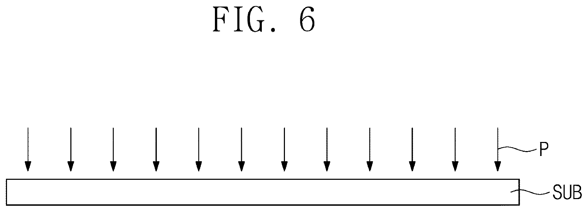

Through the method for purifying hydrogen peroxide according to the above-described embodiments of the present invention, hydrogen peroxide of high purity may be obtained. FIG. 6 is a schematic view for describing a process of cleaning a substrate using hydrogen peroxide purified according to embodiments of the present invention.

Referring to FIG. 6, the method of manufacturing an electronic device may include a process of cleaning a substrate SUB. The substrate SUB according to embodiments of the present invention may comprise a display substrate or a semiconductor substrate. Specifically, the process of cleaning the substrate SUB may include applying the hydrogen peroxide P purified by the purification method of the present invention onto the substrate SUB. As an example, the display substrate may include a substrate for an organic light emitting display device, a substrate for a micro-LED display device, or an LCD substrate. The semiconductor substrate SUB may include silicon, germanium, or silicon-germanium.

If hydrogen peroxide containing impurities is used in the cleaning process, the impurities may react with substances on the substrate SUB and cause defects in the process. Meanwhile, the purified hydrogen peroxide P according to the present invention has a very low impurity content, so that defects in the process may be prevented.

Although the present invention has been described with reference to the accompanying drawings, it will be understood by those having ordinary skill in the art to which the present invention pertains that various changes in form and details may be made therein without departing from the spirit and scope of the present invention. Therefore, it is to be understood that the above-described embodiments are exemplary and non-limiting in every respect.

## Claims

1. A method for purifying hydrogen peroxide, comprising:
regenerating an adsorbent resin of a primary purification system using an acidic solution, an alkaline solution, or a combination thereof;
purifying a crude product of hydrogen peroxide with the adsorbent resin of the primary purification system; and
purifying a primary purified hydrogen peroxide solution using a secondary purification system,
wherein the secondary purification system comprises an electrodeionization system, and
wherein the adsorbent resin removes organic carbon and cations from the crude product of hydrogen peroxide.

2. The method of claim 1,
wherein the regenerated adsorbent resin increases a stability of the primary purified hydrogen peroxide solution above a reference value, and
wherein the reference value is 90%.

3. The method of claim 1,
wherein the adsorbent resin is a non-polar polymer resin.

4. The method of claim 3,
wherein the adsorbent resin comprises a hydrophobic aromatic polymer.

5. The method of claim 1,
wherein the adsorbent resin comprises a neutral resin and an ionic resin.

6. The method of claim 1, further comprising:
regenerating the adsorbent resin using alcohol.

7. The method of claim 1,
wherein regenerating the adsorbent resin comprises removing cations from the adsorbent resin.

8. The method of claim 1,
wherein the electrodeionization system comprises:
a first electrode and a second electrode;
a first concentrate chamber, a second concentrate chamber and a dilute chamber between the first and second concentrate chambers;
an ion exchange resin provided inside the dilute chamber, the first concentrate chamber, and the second concentrate chamber;
an anion exchange membrane between the first concentrate chamber and the dilute chamber; and
a cation exchange membrane between the second concentrate chamber and the dilute chamber.

9. The method of claim 8,
wherein direct current power is applied to the first electrode and the second electrode,
wherein anion impurities in the hydrogen peroxide solution inside the dilute chamber pass through the anion exchange membrane and move to the first concentrate chamber, and
wherein cation impurities in the hydrogen peroxide solution inside the dilute chamber pass through the cation exchange membrane and move to the second concentrate chamber.

10. The method of claim 8,
wherein a first concentrate and a second concentrate are respectively introduced into the first concentrate chamber and the second concentrate chamber, and
wherein the first concentrate and the second concentrate are water.

11. The method of claim 1, further comprising:
passing the primary purified hydrogen peroxide solution through a heat exchanger.

12. A method for manufacturing an electronic device, comprising:
performing a cleaning process on a substrate using the hydrogen peroxide purified according to claim 1.
